# EUROPÄISCHE PATENTSCHRIFT

(11) **EP 0 658 461 B1**
(45) Veröffentlichungstag und Bekanntmachung des Hinweises auf die Patenterteilung: **19.02.1997**
(21) Anmeldenummer: 94110360.8
(22) Anmeldetag: 04.07.1994
(51) Int. Cl.: B60S 1/10

(54) **Pneumatischer Scheibenwischerantrieb für Schienenfahrzeuge**
Pneumatically operated windscreen wiper drive for railway vehicles
Entraînement pneumatique d'essuie-glace pour véhicules ferroviaires

(30) Priorität: 17.12.1993 DE 4343216
(43) Veröffentlichungstag der Anmeldung: 21.06.1995
(73) Patentinhaber: KNORR-BREMSE AG, 80809 München (DE); DEUTSCHE BAHN AG, 10365 Berlin (DE)
(72) Erfinder: Gürner, Gunter, D-80687 München (DE); Fiebiger, Viktor, D-80997 München (DE)

(56) Entgegenhaltungen:
- DE-A- 3 227 656
- GB-A- 2 058 232

## Beschreibung

Die Erfindung betrifft einen pneumatischen Scheibenwischerantrieb für Schienenfahrzeuge mit
a) einem Arbeitskolben, welcher zwischen zwei Endstellungen hin- und herbewegbar und in einer der Endstellungen festlegbar ist,
b) einem Steuerkolben, welcher zur Umsteuerung der Druckluftbeaufschlagung und Entlüftung des Arbeitskolbens beim Erreichen der einen bzw. der anderen Endstellung mittels der den Arbeitskolben beaufschlagenden Druckluft zwischen zwei Endstellungen hin- bzw. herbewegbar ist, und
c) einem druckluftbetätigbaren Sperrkolben zur Blockierung des Steuerkolbens in einer seiner Endstellungen und somit Festlegung des Arbeitskolbens in derjenigen Endstellung, in welche er bei dieser Steuerkolbenendstellung bewegt worden ist.

Derartige pneumatische Scheibenwischerantriebe für Schienenfahrzeuge sind zum Beispiel aus der Schrift GB-A-2 058 232 bekannt. Sie werden an ein Bedienungsventil angeschlossen, welches seinerseits mit einer Druckluftquelle in Verbindung steht. Mittels des Bedienungsventils kann die Druckluftzufuhr zum Arbeitskolben und zum Steuerkolben eingeschaltet werden, so daß der zugehörige Wischerarm und dessen Wischblatt zwischen zwei Endstellungen hin- und herschwingen. Auch kann mittels des Bedienungsventils zusätzlich die Druckluftzufuhr zum Sperrkolben des Steuerkolbens eingeschaltet werden, so daß der Wischerarm und das Wischblatt in einer Parkstellung stehenbleiben, nämlich in der Endstellung, welcher derjenigen Endstellung des Arbeitskolbens entspricht, in welcher derselbe festgelegt ist, und zwar infolge der Blockierung des Steuerkolbens in der korrespondierenden Endstellung durch den Sperrkolben.

Der Erfindung liegt die Aufgabe zugrunde, einen pneumatischen Scheibenwischerantrieb für Schienenfahrzeuge der eingangs angegebenen Art zu schaffen, welcher es erlaubt, den zugehörigen Wischerarm und dessen Wischblatt in eine vertikale Stellung zu bewegen und in dieser Stellung zu halten, in welcher der Wischerarm und das Wischblatt sich parallel zueinander erstrecken und Beschädigungen derselben durch die Waschbürsten einer Waschanlage praktisch ausgeschlossen sind, wenn das jeweilige Schienenfahrzeug durch die Waschanlage hindurchfährt.

Diese Aufgabe ist durch die im kennzeichnenden Teil des Hauptanspruchs angegebenen Merkmale gelöst. Vorteilhafte Ausgestaltungen des erfindungsgemäßen pneumatischen Scheibenwischerantriebs für Schienenfahrzeuge sind in den restlichen Ansprüchen angegeben.

Die Erfindung vermittelt insbesondere den Vorteil, daß Beschädigungen der Wischblätter und Wischerarme der Scheibenwischer von Schienenfahrzeugen beim Durchfahren einer Waschanlage durch deren Waschbürsten vermieden werden können, wobei dafür Vorsorge getroffen werden kann, daß der durch ein Bedienungsventil vorgegebene Betrieb des erfindungsgemäßen Scheibenwischerantriebs von der Bewegung des zugehörigen Wischerarms und des Wischblatts desselben in die Waschfahrtstellung und deren Fixierung in der Waschfahrtstellung unbeeinflußt bleibt. Auch kann dafür gesorgt werden, daß der erfindungsgemäße Scheibenwischerantrieb den zugehörigen Wischerarm und dessen Wischblatt automatisch in die Waschfahrtstellung bewegt und in derselben hält, nämlich immer dann, wenn der Antrieb des jeweiligen Schienenfahrzeugs auf Waschfahrt geschaltet wird.

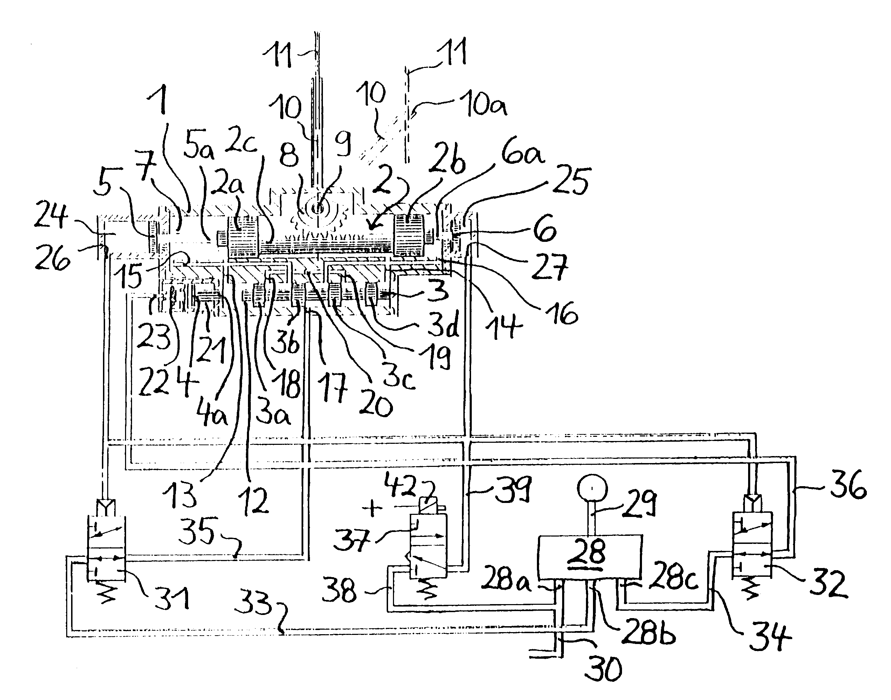

Nachstehend ist eine Ausführungsform des erfindungsgemäßen pneumatischen Scheibenwischerantriebs für Schienenfahrzeuge anhand einer einzigen Zeichnung beispielweise beschrieben.

Der dargestellte pneumatische Scheibenwischerantrieb für Schienenfahrzeuge weist ein Gehäuse 1, einen Arbeitskolben 2, einen dazu parallelen Steuerkolben 3, einen zum Steuerkolben 3 koaxialen Sperrkolben 4 und zwei zum Arbeitskolben 2 koaxiale Sperrkolben 5, 6 auf.

Der Arbeitskolben 2 ist in einer Bohrung 7 des Gehäuses 1 axial beweglich und weist zwei kolbenförmige Enden 2a sowie 2b auf, zwischen denen er als Zahnstange 2c ausgebildet ist. Mit der Zahnstange 2c kämmt ein Zahnsegment 8, welches auf einer Welle 9 befestigt ist. Die Welle 9 erstreckt sich quer zum Arbeitskolben 2 und ist im Gehäuse 1 drehbar gelagert. An dem in der Zeichnung nicht sichtbaren hinteren und aus dem Gehäuse 1 herausragenden Ende der Welle 9 wird ein Wischerarm 10 befestigt, welcher am freien Ende ein Wischblatt 11 trägt. Der Wischerarm 10 ist als Parallelogrammgestänge ausgebildet. Das Wischblatt 11 ist an der kürzeren Querstrebe 10a des Parallelogrammgestänges befestigt, welche das der Welle 9 abgewandte Ende des Parallelogrammgestänges bildet.

Der Steuerkolben 3 ist in einer Bohrung 12 des Gehäuses 1 axial beweglich und mit vier kolbenförmigen Bunden 3a, 3b, 3c und 3d versehen. Die Bohrung 12 ist an den beiden Enden über je einen Kanal 13 bzw. 14 im Gehäuse 1 mit dessen Bohrung 7 für den Arbeitskolben 2 verbunden, welche ihrerseits an den beiden Enden über je einen Kanal 15 bzw. 16 mit dem mittleren Teil der Bohrung 12 in Verbindung steht. In letztere mündet mittig ein Drucklufteingang 17 des Gehäuses 1. Außerdem kommuniziert die Bohrung 12 in gewisser Entfernung von jedem ihrer beiden Enden über einen Kanal 18 bzw. 19 mit einem Entlüftungskanal 20 im Gehäuse 1.

Der vor dem in der Zeichnung linken Ende des Steuerkolbens 3 angeordnete Sperrkolben 4 ist in einer Bohrung 21 des Gehäuses 1 axial beweglich und wirkt mit seiner Kolbenstange 4a mit dem Steuerkolben 3 zusammen. Die Bohrung 21 ist über ein Schnellentlüftungsventil 22 mit einem Drucklufteingang 23 des Gehäuses 1 verbunden.

Der vor dem in der Zeichnung linken Ende 2a des Arbeitskolbens 2 angeordnete Sperrkolben 5 und der vor dem in der Zeichnung rechten Ende 2b des Arbeitskolbens 2 angeordnete Sperrkolben 6 ist in einer Bohrung 24 bzw. 25 des Gehäuses 1 axial beweglich und wirkt mit seiner Kolbenstange 5a bzw. 6a mit dem Arbeitskolben 2 zusammen. In die beiden Bohrungen 24 und 25 mündet jeweils ein Kanal 26 bzw. 27 im Gehäuse 1.

Es ist ein Bedienungsventil 28 mit einem Handschalthebel 29 vorgesehen, welches einen Eingang 28a und zwei Ausgänge 28b sowie 28c aufweist. Der Eingang 28a ist durch eine Leitung 30 mit einer Druckluftquelle verbunden, während die beiden Ausgänge 28b und 28c jeweils über ein Ventil 31 bzw. 32 mit dem Drucklufteingang 17 bzw. 23 des Gehäuses 1 in Verbindung stehen.

Die beiden Ventile 31 und 32 sind jeweils durch eine Eingangsleitung 33 bzw. 34 mit dem Ausgang 28b bzw. 28c des Bedienungsventils 28 und durch eine Ausgangsleitung 35 bzw. 36 mit dem Drucklufteingang 17 bzw. 23 des Gehäuses 1 verbunden sowie zwischen einer ersten Stellung und einer zweiten Stellung umschaltbar. In der ersten Stellung kommuniziert die jeweilige Eingangsleitung 33 bzw. 34 mit der jeweiligen Ausgangsleitung 35 bzw. 36. In der zweiten Stellung ist die Eingangsleitung 33 bzw. 34 abgesperrt und kommuniziert die Ausgangsleitung 35 bzw. 36 mit der freien Atmosphäre. In die erste Stellung sind die beiden Ventile 31 sowie 32 jeweils federbelastet. In die zweite Stellung können sie jeweils durch Beaufschlagung mit Druckluft entgegen der Wirkung der jeweiligen Federbelastung umgeschaltet werden.

Weiterhin ist ein elektromagnetisch betätigbares Ventil 37 vorgesehen, welches durch eine Eingangsleitung 38 mit der zum Eingang 28a des Bedienungsventils 28 führenden Leitung 30 und somit der an dieselbe angeschlossenen Druckluftquelle verbunden ist, ferner durch eine sich entsprechend verzweigende Ausgangsleitung 39 mit den beiden den Sperrkolben 5 und 6 zugeordneten Kanälen 26 sowie 27 im Gehäuse 1 und den Ventilen 31 und 32.

Das elektromagnetisch betätigbare Ventil 37 ist in eine erste Stellung federbelastet, in welcher die Eingangsleitung 38 abgesperrt ist und die Ausgangsleitung 39 mit der freien Atmosphäre kommuniziert, und kann durch Erregen seines Elektromagneten 42 entgegen der Wirkung seiner Federbelastung in eine zweite Stellung umgeschaltet werden, in welcher die Eingangsleitung 38 und die Ausgangsleitung 39 miteinander kommunizieren.

Der Arbeitskolben 2 dient zum Hin- und Herschwenken des Wischerarms 10 mit dem daran angebrachten Wischblatt 11, der Steuerkolben 3 zur wechselweisen Beaufschlagung der beiden Enden 2a sowie 2b des Arbeitskolbens 2 mit Druckluft unter gleichzeitiger Entlüftung des jeweils anderen Endes 2b bzw. 2a. Der zum Steuerkolben 3 koaxiale Sperrkolben 4 ist dazu bestimmt, den Steuerkolben 3 in der dargestellten rechten Endstellung zu blockieren, um die mit strichpunktierten Linien angedeutete Parkstellung des Wischerarms 10 nebst Wischblatt 11 zu gewährleisten. Die beiden zum Arbeitskolben 2 koaxialen Sperrkolben 5 und 6 dienen zur Blockierung des Arbeitskolbens 2 in der gezeigten Zwischenstellung, in welcher der Wischerarm 10 und das Wischblatt 11 sich parallel zueinander vertikal nach oben erstrecken, wie in der Zeichnung mit ausgezogenen Linien wiedergegeben.

Der in der dargestellten Position und also mit horizontal liegendem Arbeitskolben 2 eingebaute Scheibenwischerantrieb funktioniert folgendermaßen.

Wenn er in Gang gesetzt werden soll, um den Wischarm 10 und das Wischblatt 11 hin- und herzuschwenken, wird das Bedienungsventil 28 mittels des Handschalthebels 29 so betätigt, daß der Eingang 28a mit dem Ausgang 28b kommuniziert und der Drucklufteingang 17 des Gehäuses 1 mit Druckluft beaufschlagt wird. Der Arbeitskolben 2 bewegt sich dann zwischen zwei Endstellungen hin und her, nämlich zwischen den beiden Enden seiner Bohrung 7 im Gehäuse 1, wobei der Steuerkolben 3 die entsprechende Umsteuerung der Druckluftbeaufschlagung und der Entlüftung des Arbeitskolbens 2 bewirkt.

Jedesmal dann, wenn der Arbeitskolben 2 die in der Zeichnung rechte Endstellung erreicht und sein linkes kolbenförmiges Ende 2a den Kanal 13 des Gehäuses 1 überschliffen hat, wird der Steuerkolben 3 von der auf das Ende 2a des Arbeitskolbens 2 einwirkenden Druckluft beaufschlagt und in die gezeigte rechte Endstellung in seiner Bohrung 12 im Gehäuse 1 bewegt, was zur Folge hat, daß der Bohrungsraum vor dem Ende 2a des Arbeitskolbens 2 über die miteinander in Verbindung gesetzten Kanäle 15 und 18, 20 des Gehäuses 1 entlüftet wird, ebenso wie der damit über den Kanal 13 kommunizierende Bohrungsraum vor dem linken kolbenförmigen Bund 3a des Steuerkolbens 3, während der Bohrungsraum vor dem rechten kolbenförmigen Ende 2b des Arbeitskolbens 2 über den mit dem Drucklufteingang 17 des Gehäuses 1 in Verbindung gesetzten Kanal 16 im Gehäuse 1 mit Druckluft beaufschlagt wird.

Analog wird der Steuerkolben 3 jedesmal dann, wenn der Arbeitskolben 2 die in der Zeichnung linke Endstellung erreicht und sein rechtes kolbenförmiges Ende 2b den Kanal 14 des Gehäuses 1 überschliffen hat, von der auf das Ende 2b des Arbeitskolbens 2 einwirkenden Druckluft beaufschlagt und in die linke Endstellung in seiner Bohrung 12 im Gehäuse 1 bewegt, was zur Folge hat, daß der Bohrungsraum vor dem Ende 2b des Arbeitskolbens 2 über die miteinander in Verbindung gesetzten Kanäle 16 und 19, 20 des Gehäuses 1 entlüftet wird, ebenso wie der damit über den Kanal 14 kommunizierende Bohrungsraum vor dem rechten kolbenförmigen Bund 3d des Steuerkolbens 3, während der Bohrungsraum vor dem linken kolbenförmigen Ende 2a des Arbeitskolbens 2 über den mit dem Drucklufteingang 17 des Gehäuses 1 in Verbindung gesetzten Kanal 15 im Gehäuse 1 mit Druckluft beaufschlagt wird.

Wenn der Scheibenwischerantrieb stillgesetzt werden soll, wird das Bedienungsventil 28 mittels des Handschalthebels 29 so betätigt, daß der Eingang 28a sowohl mit dem Ausgang 28b als auch mit dem Ausgang 28c kommuniziert und nicht nur der Drucklufteingang 17, sondern auch der Drucklufteingang 23 des Gehäuses 1 mit Druckluft beaufschlagt wird. Letzteres hat zur Folge, daß das Schnellentlüftungsventil 22 schließt und der Sperrkolben 4 betätigt wird, um mit seiner Kolbenstange 4a in die Bohrung 12 des Gehäuses 1 einzudringen und den Steuerkolben 3 in seiner gezeigten rechten Endstellung zu blockieren. Der Arbeitskolben 2 kann also seine linke Endstellung nicht mehr verlassen, in welcher er durch die sein rechtes kolbenförmiges Ende 2b beaufschlagende Druckluft gehalten bleibt, so daß Wischerarm 10 und Wischblatt 11 in der in der Zeichnung mit strichpunktierten Linien angedeuteten Parkstellung fixiert sind.

Völlig unabhängig davon, in welchem Betätigungszustand sich das Bedienungsventil 28 gerade befindet, können Wischerarm 10 und Wischblatt 11 in die in der Zeichnung mit ausgezogenen Linien wiedergegebene vertikale Stellung bewegt und in dieser Stellung gehalten werden, in welcher der Wischerarm 10 und das Wischblatt 11 sich parallel zueinander erstrecken. Dazu genügt es, den Elektromagneten 42 des Ventils 37 zu erregen, so daß es in seine zweite Stellung umschaltet, um die Eingangsleitung 38 und die Ausgangsleitung 39 miteinander zu verbinden. Dieses hat zur Folge, daß die beiden Sperrkolben 5 und 6 des Arbeitskolbens 2 mit Druckluft beaufschlagt werden, um mit ihren Kolbenstangen 5a und 6a in die Bohrung 7 des Gehäuses 1 einzudringen und den Arbeitskolben 2 in die dargestellte Zwischenstellung zu bewegen und in derselben zu blockieren, und daß die beiden

Ventile 31 und 32 mit Druckluft beaufschlagt werden, so daß sie jeweils in ihre zweite Stellung umschalten, um die jeweilige Eingangsleitung 33 bzw. 34 abzusperren und die jeweilige Ausgangsleitung 35 bzw. 36 mit der freien Atmosphäre kommunizieren zu lassen, also den Drucklufteingang 17 des Gehäuses 1 für den Arbeitskolben 2 und den Steuerkolben 3 bzw. den Drucklufteingang 23 des Gehäuses 1 für den Sperrkolben 4 des Steuerkolbens 3 zu entlüften.

Es hat sich herausgestellt, daß die besagte vertikale Stellung des Wischerarms 10 und des darauf ausgerichteten Wischblatts 11 besonders günstig ist, um Beschädigungen derselben durch die Waschbürsten einer Waschanlage zu vermeiden, wenn das zugehörige Schienenfahrzeug durch die Waschanlage hindurchfährt. Der Elektromagnet 42 des Ventils 37 sollte also während jeder Waschfahrt des Schienenfahrzeugs erregt sein. Dieses kann automatisch dadurch gewährleistet werden, daß der Elektromagnet 42 mit dem Waschfahrtschalter elektrisch verbunden wird, mit dessen Hilfe der Fahrzeugführer die relativ langsame Waschfahrt des Schienenfahrzeugs bewirkt.

### Bezugszeichenliste

- 1: Gehäuse
- 2: Arbeitskolben
2a Ende (links)
2b Ende (rechts)
2c Zahnstange
- 3: Steuerkolben
3a Bund (links)
3b Bund (halblinks)
3c Bund (halbrechts)
3d Bund (rechts)
- 4: Sperrkolben
4a Kolbenstange
- 5: Sperrkolben (links)
5a Kolbenstange
- 6: Sperrkolben (rechts)
6a Kolbenstange
- 7: Bohrung
- 8: Zahnsegment
- 9: Welle
- 10: Wischerarm
10a Querstrebe
- 11: Wischblatt
- 12: Bohrung
- 13: Kanal (links)
- 14: Kanal (rechts)
- 15: Kanal (links)
- 16: Kanal (rechts)
- 17: Drucklufteingang
- 18: Kanal (links)
- 19: Kanal (rechts)
- 20: Entlüftungskanal
- 21: Bohrung
- 22: Schnellentlüfungsventil
- 23: Drucklufteingang
- 24: Bohrung
- 25: Bohrung
- 26: Kanal
- 27: Kanal
- 28: Bedienungsventil
28a Eingang
28b Ausgang
28c Ausgang
- 29: Handschalthebel
- 30: Leitung
- 31: Ventil
- 32: Ventil
- 33: Eingangsleitung
- 34: Eingangsleitung
- 35: Ausgangsleitung
- 36: Ausgangsleitung
- 37: elektromagnetisch betätigbares Ventil
- 38: Eingangsleitung
- 39: Ausgangsleitung

- 42: Elektromagnet

## Patentansprüche

1. Pneumatischer Scheibenwischerantrieb für Schienenfahrzeuge mit
a) einem Arbeitskolben (2), welcher zwischen zwei Endstellungen hin- und herbewegbar und in einer der Endstellungen festlegbar ist,
b) einem Steuerkolben (3), welcher zur Umsteuerung der Druckluftbeaufschlagung und Entlüftung des Arbeitskolbens (2) beim Erreichen der einen bzw. der anderen Endstellung mittels der den Arbeitskolben (2) beaufschlagenden Druckluft zwischen zwei Endstellungen hin- bzw. herbewegbar ist, und
c) einem ersten druckluftbetätigbaren Sperrkolben (4) zur Blockierung des Steuerkolbens (3) in einer seiner Endstellungen und somit Festlegung des Arbeitskolbens (2) in derjenigen Endstellung, in welche er bei dieser Steuerkolbenendstellung bewegt worden ist,
**gekennzeichnet** durch
d) zwei weitere Sperrkolben (5, 6) zur Blockierung des Arbeitskolbens (2) in einer Zwischenstellung, welcher eine vertikale Stellung des Wischerarms (10) und des Wischblattes (11) zugeordnet ist, und
e) zwei Ventile (31, 32) zur Entlüftung des Drucklufteingangs (17) für den Arbeitskolben (2) und den Steuerkolben (3) bzw. des Drucklufteingangs (23) für den ersten Sperrkolben (4) des Steuerkolbens (3), wobei
f) die beiden weiteren Sperrkolben (5, 6) des Arbeitskolbens (2) und die beiden Ventile (31, 32) gemeinsam betätigbar sind.

2. Scheibenwischerantrieb nach Anspruch 1, dadurch **gekennzeichnet**, daß die beiden weiteren Sperrkolben (5, 6) des Arbeitskolbens (2) koaxial zu demselben vor dem einen bzw. dem anderen Ende desselben angeordnet sind.

3. Scheibenwischerantrieb nach Anspruch 1 oder 2, dadurch **gekennzeichnet**, daß die beiden Ventile (31, 32) jeweils durch eine Eingangsleitung (33 bzw. 34) mit einem Bedienungsventil (28) und durch eine Ausgangsleitung (35 bzw. 36) mit dem zugehörigen Drucklufteingang (17 bzw. 23) verbunden und zwischen zwei Stellungen umschaltbar sind, in denen die jeweilige Eingangsleitung (33 bzw. 34) und die jeweilige Ausgangsleitung (35 bzw. 36) miteinander kommunizieren bzw. die jeweilige Eingangsleitung (33 bzw. 34) abgesperrt ist und die jeweilige Ausgangsleitung (35 bzw. 36) mit der freien Atmosphäre kommuniziert.

4. Scheibenwischerantrieb nach Anspruh 1, 2 oder 3, dadurch **gekennzeichnet**, daß die beiden weiteren Sperrkolben (5, 6) des Arbeitskolbens (2) und die beiden Ventile (31, 32) jeweils mittels Druckluft betätigbar und über ein gemeinsames elektromagnetisch betätigbares Ventil (37) mit Druckluft beaufschlagbar sind.

5. Scheibenwischerantrieb nach einem der vorstehenden Ansprüche, dadurch **gekennzeichnet**, daß die gemeinsame Betätigung der beiden weiteren Sperrkolben (5, 6) des Arbeitskolbens (2) und der beiden Ventile (31, 32) mittels eines Waschfahrtschalters auslösbar ist.

6. Scheibenwischerantrieb nach Anspruch 5 in Verbindung mit Anspruch 4, dadurch **gekennzeichnet**, daß das elektromagnetisch betätigbare Ventil (37) mit dem Waschfahrtschalter elektrisch verbunden ist.

## Claims

1. Pneumatic windscreen wiper drive for railway vehicles with
a) a working piston (2), which is movable forwards and backwards between two end positions and is fixable in one of the end positions,
b) a control piston (3) which is movable forwards and backwards between two end positions by means of the compressed air acting on the working piston (2) for reversing the admission of compressed air and the ventilation of the working piston (2) on reaching one or other of the end positions, and
c) a first pneumatically actuatable stop piston (4) for blocking the control piston (3) in one of its end positions and thus fixing the working piston (2) in whichever end position it was moved to at this control piston end position,
characterised by
d) two further stop pistons (5, 6) for blocking the working piston (2) in an intermediate position, to which a vertical position of the washer arm (10) and the washer blade (11) corresponds, and
e) two valves (31, 32) for ventilating the compressed air inlet (17) for the working piston (2) and the control piston (3) on the one hand, and the compressed air inlet (23) for the first stop piston (4) of the control piston (3) on the other hand respectively,
f) the two further stop pistons (5, 6) of the working piston ((2) and the two valves (31, 32) being actuatable together.

2. Windscreen wiper drive according to claim 1, characterised in that the two further stop pistons (5, 6) of the working piston (2) are arranged coaxially to the same in front of the one and the other end of the same respectively.

3. Windscreen wiper drive according to claim 1 or 2, characterised in that the two valves (31, 32) are connected via respective inlet lines (33 and 34) to an operating valve (28) and via outlet lines (35 and 36) to the relevant compressed air inlet (17, 23) and are switchable between two positions, in which the respective inlet line (33, 34) and the respective outlet line (35, 36) communicate with each other or the respective inlet line (33, 34) is blocked and the respective outlet line (35, 36) communicates with the open air.

4. Windscreen wiper drive according to claim 1, 2 or 3, characterised in that the two further stop pistons (5, 6) of the working piston (2) and the two valves (31, 32) are actuatable by means of compressed air and can be acted upon by compressed air via a common electromagnetically actuatable valve (37).

5. Windscreen wiper drive according to one of the previous claims, characterised in that the common actuation of the two further stop pistons (5, 6) of the working piston (2) and of the two valves (31, 32) can be set in train by means of a wash travel switch.

6. Windscreen wiper drive according to claim 5 in connection with claim 4, characterised in that the electromagnetically actuatable valve (37) is electrically connected to the wash travel switch.

## Revendications

1. Moteur d'essuie-glace pneumatique pour véhicules ferroviaires comprenant :
a) un piston de travail (2) susceptible d'être déplacé en un mouvement de va-et-vient entre deux positions de fin de course et d'être immobilisé dans l'une des positions de fin de course,
b) un piston de commande (3) qui, pour inverser l'alimentation en air comprimé et la purge du piston de travail (2) en parvenant dans l'une ou l'autre position de fin de course, est déplaçable en un mouvement de va-et-vient entre deux positions de fin de course, au moyen de l'air comprimé alimentant le piston de travail (2), et
c) un premier piston d'arrêt (4) actionné à l'air comprimé, pour bloquer le piston de commande (3) dans l'une de ses positions de fin de course et ainsi immobiliser le piston de travail (2) dans la position de fin de course dans laquelle il a été déplacé lorsque le piston de commande se trouve dans ladite position de fin de course, caractérisé par
d) deux autres pistons d'arrêt (5, 6) pour bloquer le piston de travail (2) dans une position intermédiaire, qui est associée à une position verticale du bras d'essuie-glace (10) et de la lame d'essuie-glace (11), et
e) deux soupapes (31, 32) destinées à mettre à l'atmosphère l'entrée d'air comprimé (17) pour le piston de travail (2) et le piston de commande (3) et respectivement l'entrée d'air comprimé (23) pour le premier piston d'arrêt (4) du piston de commande (3),
f) les deux autres pistons d'arrêt (5, 6) du piston de travail (2) et les deux soupapes (31, 32) pouvant être actionnés en commun.

2. Moteur d'essuie-glace selon la revendication 1, caractérisé en ce que les deux autres pistons d'arrêt (5, 6) du piston de travail (2) sont disposés coaxialement à ce dernier, en amont de l'une de ses extrémités et, respectivement, de l'autre.

3. Moteur d'essuie-glace selon la revendication 1 ou 2, caractérisé en ce que les deux soupapes (31, 32) sont reliées chacune, par une conduite d'entrée (33 ou 34), à une soupape de commande (28) et, par une conduite de sortie (35 ou 36), à l'entrée d'air comprimé associée (17 ou 23) et sont commutables entre deux positions, dans lesquelles, respectivement, la conduite d'entrée respective (33 ou 34) et la conduite de sortie respective (35 ou 36) communiquent ensemble et la conduite d'entrée respective (33 ou 34) est obturée et la conduite de sortie respective (35 ou 36) est mise à l'atmosphère.

4. Moteur d'essuie-glace selon la revendication 1, 2 ou 3, caractérisé en ce que les deux autres pistons d'arrêt (5, 6) du piston de travail (2) et les deux soupapes (31, 32) sont respectivement actionnables au moyen d'air comprimé et peuvent être alimentés en air comprimé par l'intermédiaire d'une soupape électromagnétique commune (37).

5. Moteur d'essuie-glace selon l'une des revendications précédentes, caractérisé en ce que l'actionnement commun des deux autres pistons d'arrêt (5, 6) du piston de travail (2) et des deux soupapes (31, 32) est déclenché au moyen d'un interrupteur de marche pour le lavage.

6. Moteur d'essuie-glace selon la revendication 5 en relation avec la revendication 4, caractérisé en ce que la soupape électromagnétique (37) est reliée électriquement à l'interrupteur de marche pour le lavage.
